# EUROPÄISCHE PATENTSCHRIFT

(11) **EP 2 206 428 B1**
(45) Veröffentlichungstag und Bekanntmachung des Hinweises auf die Patenterteilung: **12.04.2017**
(21) Anmeldenummer: 09179411.5
(22) Anmeldetag: 16.12.2009
(51) Int. Cl.: A01N 25/00, A01N 25/02, A01C 23/02, A01G 29/00, A01M 17/00

(54) **Verfahren zur chemischen und/oder biologischen Bekämpfung von Pflanzenschädlingen, insbesondere Wurzelschädlingen, und Krankheiten bei Kulturpflanzen**
Method for chemical and/or biological combating of plant pests, in particular root pests and diseases of cultivated plants
Procédé de lutte chimique et/ou biologique d'insectes parasites sur des plantes, notamment les vers, et maladies liées aux plantes cultivées

(30) Priorität: 22.12.2008 DE 102008064240
(43) Veröffentlichungstag der Anmeldung: 14.07.2010
(73) Patentinhaber: Siegfried Mantel Landtechnikproduktion, 97499 Donnersdorf (DE)
(72) Erfinder: Mantel, Siegfried, 97499 Donnersdorf (DE)
(74) Vertreter: advotec.

(56) Entgegenhaltungen:
- WO-A1-92/03045
- WO-A1-99/07221
- WO-A1-02/069692
- WO-A2-2008/025542
- DE-A1- 2 653 023
- DATABASE CAPLUS [Online] CHEMICAL ABSTRACTS SERVICE, COLUMBUS, OHIO, US; 1991, A. R. Thompson et al.: "Compatibility of liquid insecticide treatments and starter fertilizer solution applied under radish at sowing", XP002682774, gefunden im STN accession no. 1991:180304 Database accession no. 1991:180304 & A. R. THOMPSON ET AL.: "Compatibility of liquid insecticide treatments and starter fertilizer solution applied under radish at sowing", MEDEDELINGEN FACULTEIT LANDBOUWWETENSCHAPPEN, GENT, Bd. 55, Nr. 2b, 1990, Seiten 647-655, ISSN: 0368-9697
- DATABASE BIOSIS [Online] BIOSCIENCES INFORMATION SERVICE, PHILADELPHIA, PA, US; STANTON G ET AL: "Use of soil and trunk injection of systemic insecticides to control lace bug on hawthorn", XP002382247, gefunden im BIOSIS Database accession no. PREV199900123634 & S. GILL ET AL.: "Use of soil and trunk injection of systemic insecticides to control lace bug on hawthorn", J. ARBORICULTURE, Bd. 25, Nr. 1, Januar 1999 (1999-01), Seiten 38-42, ISSN: 0278-5226
- K. BLACKBURN ET AL: "High-pressure Liquid Injection of Isazofos for Management of Hoplolairnus galeatus and Tylenchorhynchus dubius Infesting Turfgrasses", SUPPLEMENT TO THE JOURNAL OF NEMATOLOGY, Bd. 29, Nr. 4S, 1. Januar 1997 (1997-01-01), Seiten 690-694, XP55037110,
- FURLAN L ET AL: "The ineffectiveness of insecticide seed coatings and planting-time soil insecticides as Diabrotica virgifera virgifera LeConte population suppressors", JOURNAL OF APPLIED ENTOMOLOGY, WILEY-BLACKWELL VERLAG GMBH, DE, vol. 130, no. 9-10, 1 January 2006 (2006-01-01), pages 485-490, XP009112601, ISSN: 0931-2048
- DATABASE CAPLUS, [Online] 01 Januar 1990 THOMPSON A R ET AL: 'Compatibility of liquid insecticide treatments and starter fertilizer solution applied under radish at sowing', XP002682774 Retrieved from CAPLUS Database accession no. 1991-180304

## Beschreibung

Die Erfindung betrifft ein Verfahren zur chemischen und/oder biologischen Bekämpfung Wurzelschädlingen, und Krankheiten bei Kulturpflanzen.

Insbesondere beim großflächigen und monokulturartigen Anbau von Pflanzen, wie er beispielsweise zur Futtermittel- oder Biomassegewinnung bei Mais üblich ist, treten mit zunehmender Häufung wirtschaftlich bedeutende Schäden durch Schädlinge verschiedenster Art auf. Der weltweit wirtschaftlich bedeutendste Maisschädling ist dabei der Maiswurzelbohrer (Diabrotica virgifer virgifera). Durch Einschleppung insbesondere aus Osteuropa und den USA hat sich dieser Schädling inzwischen in weiten Teilen Mitteleuropas etabliert. Der Maiswurzelbohrer ist ein Käfer, der zur Fortpflanzung eine hohe Zahl von Eiern im Altmais des Vorjahres ablegt. Im Frühjahr schlüpfen aus diesen Eiern Larven, die die Wurzeln junger Maispflanzen anfressen und dadurch die Wasser- und Nährstoffaufnahme der Pflanzen verschlechtern. Dies führt in der Praxis zu Ertragseinbußen von bis zu 80%.

Es ist bekannt, den Maiswurzelbohrer durch mit entsprechenden Insektiziden, wie sie beispielsweise unter dem Handelsnamen "Poncho Pro" bekannt sind, gebeiztem Saatgut zu bekämpfen. Nachteilig dabei ist aufgrund der geringen auszubringenden Insektizidmenge die geringe bzw. kurzfristige Wirkung.

Es ist ferner bekannt, entsprechendes Insektizid als Granulat in der Saatreihe auszubringen. Auch diese Maßnahme hat sich in der Praxis als wenig wirksam erwiesen, da nur vergleichsweise geringe Mengen des Insektizides durch Auswaschung in den Boden in den Bereich der Wurzeln und damit in den Lebensraum der Larven gelangen.

In der Veröffentlichung "Compatibility of liquid insecticide treatments and starter fertilizer solution applied under radish at sowing" von A.R. Thompson et al., Mededelingen Faculteit Landbouwwetenschappen, Gent, Bd. 55, Nr. 2b, 1990, S. 647-655, ist ein Verfahren zum Einbringen von Insektiziden in die Erde während des Aussäens von Radieschen mittels Injektionsschar bekannt.

Die Veröffentlichung "Use of soil and trunk injection of systemic insecticides to control lace bug on hawthorn" von G. Stanton et al., J. Arboriculture, Bd. 25, Nr. 1, 1999, S. 38-42, betrifft ein Verfahren zur Einbringung von systemischen Insektiziden in den Boden in den Wurzelbereich von Weißdorn mittels eine Kioritz-Injektors.

Aus der Veröffentlichung "High-pressure Liquid Injection of Isazofos for Management of Hoplolaimus galeatus and Tylenchorhynchus dubius Infesting Turfgrasses" von K. Blackburn et al., Supplement To The Journal Of Nematology, Bd. 29, Nr. 4s, 1997, S. 690-694, ist ein Verfahren bekannt, in dem Insektizide zusammen mit ammoniumhaltigen Düngemittel in den Boden eingebracht werden.

In der WO 02/069692 A1 ist ein Verfahren zur Einbringung eines Insektizides unter die Erdoberfläche beschrieben, wobei mittels eines Zinkens die Erdoberfläche durchgezogen und das Insektizid gepulst abgegeben wird. Dabei erfolgt diese Bearbeitung zur Vorbereitung des Pflanzens, also vor dem Pflanzen oder Säen.

Aus der WO 99/07221 A1 ist ein Verfahren zur Einbringung von Insektiziden in die Erde mittels Injektion bekannt. Als Injektionsparameter wird angegeben, dass die Injektionstiefe so gewählt werden muss, dass ein Ausgasen des Wirkmittels verhindert wird.

In der WO 2008/025542 A2 ist ein Verfahren zur Bekämpfung des Maiswurzelbohrers beschrieben, bei dem der Wirkstoff durch Injektion in den Boden eingebracht wird. Wo genau und wann der Wirkstoff eingebracht werden soll ist dieser Druckschrift nicht zu entnehmen.

Aus der Veröffentlichung "The ineffectiveness of insecticide seed coatings and planting-time soil insecticides as Diabrotica virgifera virgifera LeConte population suppressors" von L. Furlan et al., J. Appl. Entomol. 130(9-10), 485-490, 2006, ist bekannt, dass eine sogenannte "in-furrow" Applikation von Insektiziden zur Bekämpfung des Maiswurzelbohrers gerade nicht geeignet ist.

Schließlich ist aus Chemical Abstracts 1991:180304 /Thompson et al. ein Verfahren zum Ausbringen eines Insektizides durch Injektion beim Aussäen von Radieschen bekannt.

Ausgehend von diesem Stand der Technik ist es die Aufgabe der vorliegenden Erfindung, ein Verfahren zur chemischen und/oder biologischen Bekämpfung des Maiswurzelbohrers, und Krankheiten bei Kulturpflanzen zu schaffen, das eine verbesserte Wirksamkeit aufweist.

Diese Aufgabe wird durch ein Verfahren nach der Lehre des Anspruchs 1 gelöst.

Vorteilhafte Ausgestaltungen der Erfindung sind Gegenstand der Unteransprüche.

Gemäß dem erfindungsgemäßen Verfahren zur chemischen und/oder biologischen Bekämpfung des Maiswurzelbohrers (Diabrotica virgifera virgifera), wird ein flüssiges, insbesondere ein systemisch wirkendes Wirkmittel zusammen mit einem Flüssigdünger mit einer Injektionsvorrichtung nach der Aussaat in den Boden, zumindest teilweise unmittelbar in den Wurzelbereich der zu schützenden Pflanzen, insbesondere von Maispflanzen, eingebracht. Dies bedeutet mit anderen Worten, dass das Wirkmittel genau in den Bereich geführt wird, in dem es wirken soll, nämlich in den Wurzelbereich im Boden, in dem sich beispielsweise die zu bekämpfenden Larven befinden. Bereits dadurch kann zum einen die absolute Menge des auszubringenden Wirkmittels verringert und zum anderen die Wirksamkeit erhöht werden.

"Flüssiges" Wirkmittel bedeutet dabei entweder ein originär flüssiger Wirkstoff oder aber ein löslicher Wirkstoff, der in einer entsprechenden Flüssigkeit unter Bildung des Wirkmittels aufgelöst wird.

Die Einbringung des Wirkmittels in den Boden kann auf grundsätzlich beliebige Art und Weise erfolgen. So kann beispielsweise das Wirkmittel mittels spritzen- oder stangenförmiger Injektoren, die in den Boden gestoßen werden, eingespritzt werden. Nach einem bevorzugten Ausführungsbeispiel der Erfindung jedoch weist die Injektionsvorrichtung mindestens ein Injektionselement in Form eines Injektionsrades, einer Injektionsschar oder eines Injektionszinkens auf, wobei das Injektionselement fluidleitend mit einem Vorratsbehälter für das Wirkmittel verbunden ist. Dabei kann ein Injektionsrad eine Vielzahl von radial angeordneten einzelnen Injektoren aufweisen, die beim Abrollen des Rades unter Bodenverwundung nacheinander in den Boden eindringen und dort das Wirkmittel abgeben. Im Fall von Schar- oder Zinkeninjektoren kann eine Vielzahl von Einzelinjektoren nebeneinander angeordnet werden und nach Bodenverwundung durch die Schare oder Zinken das Insektizid in den Boden abgeben.

Nach der Erfindung wird das Wirkmittel zusammen mit einem Flüssigdünger ausgebracht. Flüssigdünger und Wirkmittel bilden dabei im Boden im Wurzelbereich angelegte Düngerdepots, die von den Wurzeln der Kulturpflanzen erwachsen werden. Dabei wird von den Wurzeln sowohl Dünger als auch das Wirkmittel aufgenommen. Bei diesem Verfahren wirkt das Wirkmittel sowohl unmittelbar im Boden als auch mittelbar systemisch durch Aufnahme durch die Larven beim Anfressen der Wurzeln.

Dabei kann in beliebiger Weise ein flüssiges Gemisch von Wirkmittel und Dünger aus einem Vorratsbehälter ausgebracht werden. Es kann jedoch ebenso vorgesehen sein, dass das flüssige Wirkmittel und der Flüssigdünger aus getrennten Vorratsbehältern durch jeweils separate Injektoren in den Boden eingebracht werden.

Die Art des Flüssigdüngers ist grundsätzlich beliebig und hängt von Boden und den Ansprüchen der jeweiligen Kulturpflanze ab. Insbesondere bei Mais ist der Flüssigdünger vorzugsweise ein Ammonium enthaltender Flüssigdünger.

Die Ausbringung des Wirkmittel-Dünger-Gemisches erfolgt nach der Aussaat der zu schützenden Pflanzen. Zu diesem Zeitpunkt sind insbesondere die Pflanzreihen bereits ausgebildet, so dass dann die Ausbringung des Wirkmittel-Flüssigdünger-Gemisches zielgenau erfolgen kann, wodurch sich zum einen die Wirksamkeit der Bekämpfungsmaßnahme erhöht und zum anderen die Menge des benötigten Wirkmittels auf das notwendige Minimum reduziert werden kann.

Vorzugsweise ist das Wirkmittel ein Insektizid In grundsätzlich beliebiger Weise kann das erfindungsgemäße Verfahren insbesondere auch beim Schutz von Rapspflanzen, insbesondere zur Bekämpfung des Rapsglanzkäfers, oder im Grünlandbereich, beispielsweise bei Sportplätzen und Parkanlagen, zur Bekämpfung von beispielsweise Engerlingen, Drahtwürmern und dergleichen Verwendung finden Eine solche Verwendung gehört jedoch nicht zum beanspruchten Schutzumfang.

## Patentansprüche

1. Verfahren zur chemischen und/oder biologischen Bekämpfung des Maiswurzelbohrers (Diabrotica virgifera virgifera),
**dadurch gekennzeichnet,**
**dass** ein flüssiges, insbesondere systemisches Wirkmittel zusammen mit einem Flüssigdünger mit einer Injektionsvorrichtung nach der Aussaat in den Boden unmittelbar in den Wurzelbereich der zu schützenden Maispflanzen eingebracht wird.

2. Verfahren nach Anspruch 1,
**dadurch gekennzeichnet,**
**dass** die Injektionsvorrichtung mindestens ein Injektionselement in Form eines Injektionsrades, einer Injektionsschar oder eines Injektionszinkens aufweist, wobei das Injektionselement fluidleitend mit einem Vorratsbehälter für das Wirkmittel verbunden ist.

3. Verfahren nach Anspruch 1 oder 2,
**dadurch gekennzeichnet,**
**dass** der Flüssigdünger ein Ammonium enthaltender Flüssigdünger ist.

4. Verfahren nach einem der Ansprüche 1 bis 3,
**dadurch gekennzeichnet,**
**dass** das Wirkmittel ein Insektizid ist.

## Claims

1. A method for chemical and/or biological control of the Western corn rootworm (*Diabrotica virgifera virgifera*),
**characterized in that**
a liquid agent, in particular a systemic agent, is introduced into the soil together with a liquid fertilizer directly into the root zone of the corn plants to be protected by means of an injection device after sowing.

2. The method according to claim 1,
**characterized in that**
the injection device has at least one injection element in the form of an injection wheel, an injection coulter or an injection tine, the injection element being in fluid communication with a storage tank for the agent.

3. The method according to claim 1 or 2,
**characterized in that**
the liquid fertilizer is a liquid fertilizer containing ammonium.

4. The method according to any one of claims 1 to 3,
**characterized in that**
the agent is an insecticide.

## Revendications

1. Procédé de lutte chimique et/ou biologique contre la chrysomèle des racines du maïs (*Diabrotica virgifera virgifera*),
**caractérisé en ce qu'**
un agent actif liquide, notamment systémique, est introduit dans le sol avec un engrais liquide directement dans la zone des racines des plantes de maïs à protéger à l'aide d'un dispositif d'injection après l'ensemencement.

2. Procédé selon la revendication 1,
**caractérisé en ce que**
le dispositif d'injection comporte au moins un élément d'injection sous la forme d'une roue d'injection, d'un soc d'injection ou d'une dent d'injection, l'élément d'injection étant en communication de fluide avec un réservoir de stockage pour l'agent actif.

3. Procédé selon la revendication 1 ou 2,
**caractérisé en ce que**
l'engrais liquide est un engrais liquide contenant de l'ammonium.

4. Procédé selon l'une quelconque des revendications 1 à 3,
**caractérisé en ce que**
l'agent actif est un insecticide.
